Europäisches Patentamt

European Patent Office

Office européen des brevets

(19)

(11) Veröffentlichungsnummer: **0 223 182 B1**

(12) **EUROPÄISCHE PATENTSCHRIFT**

(45) Veröffentlichungstag der Patentschrift: **05.01.94**

(21) Anmeldenummer: **86115591.9**

(22) Anmeldetag: **11.11.86**

(51) Int. Cl.⁵: **C08F 210/02**, //(C08F210/02, 220:04,222:02)

(54) **Ionomermodifiziertes Polyethylen, Verfahren zu seiner Herstellung und seine Verwendung als Folienmaterial.**

(30) Priorität: **21.11.85 DE 3541096**
  **13.06.86 DE 3620034**
  **12.09.86 DE 3631005**

(43) Veröffentlichungstag der Anmeldung:
  **27.05.87 Patentblatt 87/22**

(45) Bekanntmachung des Hinweises auf die Patenterteilung:
  **05.01.94 Patentblatt 94/01**

(84) Benannte Vertragsstaaten:
  **AT BE DE ES FR GB IT NL SE**

(56) Entgegenhaltungen:
  **FR-A- 1 306 590**
  **US-A- 3 264 272**
  **US-A- 3 379 702**

(73) Patentinhaber: **EC ERDÖLCHEMIE GMBH**
**Alte Strasse 201**
**D-50769 Köln(DE)**

(72) Erfinder: **Herwig, Jens, Dr.**
**Nerzweg 2**
**D-5000 Köln 40(DE)**
Erfinder: **Kolwert, Alois, Dr.**
**Im Winkel 26**
**D-5064 Rösrath(DE)**
Erfinder: **Sutter, Hubert, Dr.**
**Domblick 28**
**D-5090 Leverkusen 3(DE)**
Erfinder: **Woltjes, Dieter, DI.**
**Claudiusstrasse 47**
**D-4047 Dormagen(DE)**

(74) Vertreter: **Müller, Gerhard, Dr. et al**
**BAYER AG**
**Konzernverwaltung RP**
**Patente Konzern**
**D-51368 Leverkusen (DE)**

EP 0 223 182 B1

**Beschreibung**

Die Erfindung betrifft Folien aus ionomermodifiziertem Polyethylen (Ethylen-Carbonsäure-Copolymere, deren Säuregruppen teilweise neutralisiert sind) und ihre Herstellung.

Es wurden Folien aus ionomermodifiziertem niederdichtem Polyethylen (LDPE), das durch Copolymerisation von Ethylen und gegebenenfalls weiteren Comonomeren mit mindestens einer ungesättigten Carbonsäure und gegebenenfalls mindestens einem Metallsalz dieser Säure in Gegenwart von radikalischen Polymerisationsinhibitoren unter den Bedingungen der Ethylen-Hochdruckpolymerisation und gegebenenfalls nachträglicher Teilneutralisation hergestellt werden kann, wobei die Folien einen Weiterreißwiderstand von 30-200 g, eine relative Strangausziehfähigkeit von 1,3-1,9 m und eine Dart-Drop-Festigkeit von 220-720 g aufweisen, gefunden, die dadurch gekennzeichnet sind, daß die im Copolymeren vorhandenen Carboxylgruppen zu 30-95 % mit Metallkationen neutralisiert sind und daß die neutralisierten Carboxylgruppen 0,1-0,8 Mol-% der Gesamtzahl aller Monomeren darstellen und daß das Copolymer einen Schmelzindex im Bereich von 0,1-20 g/10 min (190 ° C; 2,16 kp) besitzt.

Als ungesättigte Carbonsäuren seien beispielsweise Acrylsäure, Methacrylsäure, Maleinsäure, Maleinsäuremonoester, Itaconsäure und Fumarsäure, bevorzugt Methacrylsäure und Acrylsäure, genannt.

Als Kationen von Salzen solcher ungesättigter Säuren seien ein-, zwei- oder dreiwertige Kationen genannt, wie die von Lithium, Natrium, Kalium, Magnesium, Calcium, Zink, Kupfer oder Aluminium. In bevorzugter Weise seien Salze mit ein- oder zweiwertigen Kationen genannt. Grundsätzlich sind auch Kationen weiterer Metalle denkbar, jedoch scheiden viele wegen ihres hohen Preises oder wegen ihrer Giftigkeit (z.B. Barium) aus. In bevorzugter Weise seien die Kationen von Natrium, Zink und Magnesium genannt.

In den erfindungsgemäßen ionomermodifizierten Folien sind die Säuregruppen teilweise neutralisiert. Beispielsweise sei ein Neutralisationsgrad von 30 - 95 %, bevorzugt 50 bis 90 % genannt. D.h., daß zur erfindungsgemäßen Herstellung solcher Folien ein Gemisch von solchen Metallsalzen mit nicht neutralisierten ungesättigten Carbonsäuren eingesetzt wird.

Die Mitverwendung nicht neutralisierter ungesättigter Carbonsäuren neben den zugehörigen Salzen ergibt ionomermodifizierte Polyethylene mit stabilen Schmelzindices, wohingegen bei vollständig neutralisierten Säuregruppen im Ionomer häufig im Verlaufe der Zeit ein Anstieg des Schmelzindex beobachtet wird (s. Tab. 1, Beispiel 1 und 3).

Zusätzlich zum Ethylen und zum Gemisch ungesättigte Carbonsäure/Salz können weitere Comonomere im ionomermodifizierten Polyethylen vorhanden sein, so daß Terpolymerisate oder noch höhere Copolymerisate vorliegen. Als solche weiteren Comonomeren kommen beispielsweise Vinylacetat, Acrylnitril, Kohlenmonoxid, Schwefeldioxid, Maleinsäurediester, Acrylsäureester, Methacrylsäureester oder auch Gemische dieser Stoffe, bevorzugt Vinylacetat, Acrylsäureester oder Methacrylsäureester, in Frage.

Die neutralisierten Carboxylgruppen in den Folien, gerechnet als neutralisierte, carboxylgruppenhaltige Comonomere, stellen 0,1-0,8 Mol-%, bevorzugt 0,15-0,6 Mol-% der Gesamtmolzahl aller eingebauten Monomeren dar. Bei Comonomeren, die 2 Carboxylgruppen enthalten, sind diese Mol-%-Zahlen entsprechend der verdoppelten Anzahl der Carboxylgruppen zu halbieren. In entsprechender Weise ist die Mol-%-Zahl mehrwertiger Kationen, wenn solche zur Neutralisation herangezogen werden, durch Division mit ihrer Wertigkeit zu ermitteln. So sind beispielsweise 0,1-0,8 Mol-% neutralisierte Carboxylgruppen durch Verwendung von 0,05-0,40 Mol-% Zinkionen zu erhalten.

Aus US 3 264 272 ist es bekannt, ein in einer ersten Verfahrensstufe hergestelltes Copolymerisat, beispielsweise aus Ethylen und Methacrylsäure, in einer zweiten Verfahrensstufe unter homogenen Bedingungen mit ein- oder zweiwertigen Kationen, die in Form geeigneter Verbindungen angeboten werden, zu neutralisieren. Durch den erforderlichen zweiten Herstellungsschritt der Neutralisation unter homogenen Bedingungen, d.h. durch das erneute Aufschmelzen der Säure-Copolymeren, die Einarbeitung geeigneter Kationen und die Entfernung der dabei anfallenden Spaltprodukte (Wasser, Alkohole u.a.) entstehen jedoch erhöhte Kosten im Vergleich zu einer üblicherweise einstufigen Copolymerisation, wie beispielsweise im Falle eines Ethylen-Vinylacetat-Copolymeren.

Bereits früher wurde das Copolymerisationsverhalten von Natriumacrylat in wäßrigen bzw. protischen Lösungen studiert, wobei Unterschiede im Copolymerisationsverhalten von Methacrylat und nicht neutralisierter Methacrylsäure festgestellt wurden (J. Am. Chem. Soc. 75 (1953), 4221-4223).

Die Copolymerisationsparameter von Salzen ungesättigter Carbonsäuren können beträchtlich schwanken und zwar in entscheidender Abhängigkeit von der Art und Größe des Kations sowie in Abhängigkeit vom Lösungsmittel (Eur. Polym. 3-7 (1971), 797-804; Ibid. 8 (1972), 921-926).

Besonders schwierig gestaltet sich die Copolymerisation in solchen Fällen, in denen die Comonomeren mehrere Phasen bilden, wenn also die einzelnen Comonomeren nicht oder nur unzureichend untereinander mischbar sind, wie dies beispielsweise für Ethylen und Natriummethacrylat der Fall ist. Aufgrund der jeweils hohen einheitlichen Monomerkonzentrationen in den einzelnen Phasen eines solchen Systems sind die Voraussetzungen für eine nur von der Statistik bestimmte Copolymerisation schlecht, so daß hauptsächlich ein Gemisch von Homopolymeren mit möglichen Anteilen an Blockcopolymeren zu erwarten ist. Eine Ionomerherstellung aus einem Gemisch von Ethylen und Salzen ungesättigter Carbonsäuren, gegebenenfalls einer Lösung dr Salze, erschien daher wenig erfolgversprechend; somit wäre auch zu erwarten gewesen, daß die nach einem solchen Verfahren hergestellten Ionomeren ein unbefriedigendes Eigenschaftsbild, wie Inhomogenitäten und schlechte mechanische Eigenschaften, aufweisen würden.

Überraschenderweise wurde dennoch ein durch direkte, d.h. einstufige Herstellung erhältliches homogenes, ionomermodifiziertes Polyethylen zur Herstellung von Folien erhalten.

Die Erfindung betrifft somit weiterhin ein Verfahren zur Herstellung von Folien aus ionomermodifiziertem niederdichten Polyethylen (LDPE), das durch Zusatz weiterer Comonomerer modifiziert sein kann, das dadurch gekennzeichnet ist, daß Ethylen und gegebenenfalls die weiteren Comonomeren unter den Bedingungen der Ethylen-Hochdruckpolymerisation mit mindestens einer ungesättigten Carbonsäure und mindestens einem Metallsalz dieser Säure oder einem Salz/Säure-Gemisch in Gegenwart von radikalischen Polymerisationsinhibitoren umgesetzt werden und dabei die Konzentration der einpolymerisierten neutralisierten ungesättigten Carbonsäuren bei höchstens 0,1-0,8 Mol-%, bezogen auf umgesetztes Ethylen und die gegebenenfalls weiteren Comonomeren, und der Neutralisationsgrad der Carboxylgruppen bei 30-95 % gehalten werden, wobei die Copolymeren ferner Schmelzindices von 0,1-20 g/10 min (190°C; 2,16 kp) besitzen, und übliche Weiterverarbeitung zu Folien.

Für den Fall, daß das Gemisch aus der ungesättigten Carbonsäure (oder mehrerer Säuren) und dem oder den zugehörigen Salzen homogen ist, kann es als solches der Copolymerisation zugeführt werden. In vielen Fällen ist es jedoch zweckmäßig, für die einzusetzenden ungesättigten Carbonsäuren und deren Salze ein Lösungsmittel zu verwenden. Hierfür geeignete Lösungsmittel sind beispielsweise Methanol, Ethanol, Propanol, Isopropanol, Butanol, Isobutanol, Amylalkohol, Glykol aber auch andere, unter Hochdruckpolymerisationsbedingungen stabile Lösungsmittel, wie Dimethylformamid oder Tetrahydrofuran; selbstverständlich können auch Gemische dieser Lösungsmittel eingesetzt werden. Als Mindestmenge des einzusetzenden Lösungsmittels sei die genannt, die eine homogene Lösung der ungesättigten Carbonsäuren und ihrer Salze herzustellen erlaubt. Die Obergrenze der Lösungsmittelmenge ist durch wirtschaftliche Überlegungen gesetzt, da das Lösungsmittel aus der Polymerisationsreaktion ausgeschleust werden muß. Vielfach kommen Mengen von 2 - 10 Gew.-Teilen Lösungsmittel pro 1 Gew.-Teil des Gemisches ungesättigte(s) Säure/Salz, bevorzugt 4 - 7 Teile Lösungsmittel pro 1 Teil des Gemisches ungesättigte(s) Säure/Salz in Betracht.

Das erfindungsgemäße Verfahren wird unter den Bedingungen der Ethylen-Hochdruckpolymerisation durchgeführt. Hierzu seien Drucke im Bereich von 500 - 3000 bar, bevorzugt 1200 - 3000 bar und Temperaturen im Bereich von 120 - 300°C, bevorzugt 160 - 280°C, besonders bevorzugt 200 - 260°C, genannt. Die Polymerisation erfolgt kontinuierlich beispielsweise in einem adiabatisch betriebenen Autoklaven oder in einer entsprechenden Autoklavenkaskade; für den Fall der Benutzung einer Autoklavenkaskade kann man von der Möglichkeit Gebrauch machen, die nachfolgenden Autoklaven als Verweilzeitreaktoren zur Vervollständigung des Comonomerenumsatzes zu verwenden. Weiterhin kann die Polymerisation in einem Strömungsrohr oder in einer Kombination aus Rührautoklav und Strömungsrohr betrieben werden. Besonders zu bevorzugen ist die Serienfahrweise mit zwei Rührautoklaven, wobei im zweiten Reaktor die Möglichkeit zum nahezu vollständigen Comonomerumsatz gegeben ist.

Erfindungsgemäß einsetzbare radikalische Polymerisationsinitiatoren sind beispielsweise: tert.-Butylperacetat, Di-tert.-amylperoxid, Di-tert.-butylperoxid, tert.-Butylhydroperoxid, tert.-Amylperpivalat, Butyl-per-2-ethylhexanoat, tert.-Butylperpivalat, tert.-Butylperneodecanoat, tert.-Butylperisononanoat, tert.-Amyl-perneodecanoat oder tert.-Butylperbenzoat. Daneben kann in Gegenwart von Molekulargewichtsreglern gearbeitet werden, wie gesättigten und ungesättigten Kohlenwasserstoffen oder Oxoverbindungen, z.B. Ethan, Propan, Propen, Aceton, Acetaldehyd, Propionaldehyd, Glyoxal, o.ä.

Die erfindungsgemäßen Folien können durch das oben beschriebene Verfahren der einstufigen Copolymerisation von Ethylen und ungesättigten Säuren im Gemisch mit ihren Salzen und üblicher Weiterverarbeitung zu Folien hergestellt werden. Selbstverständlich können ionomermodifizierte Copolymerisate für die erfindungsgemäßen Folien auch in konventioneller Weise hergestellt werden, wobei zunächst ein Copolymer aus Ethylen und ungesättigten Carbonsäuren (gegebenenfalls unter weiterer Hinzufügung der obengenannten weiteren Comonomeren, so daß ein Terpolymer entsteht) hergestellt wird, das erst in einem zweiten Herstellungsschritt mit einer oder mehreren Verbindungen eines der oben angegebenen Metalle (z.B. Oxide, Hydroxide, Alkoholate, Salze) im angegebenen Umfang neutralisiert wird. Eine solche, in einem zweiten Herstellungsschritt erfolgende Neutralisation kann in einer dem Fachmann geläufigen Weise auf

EP 0 223 182 B1

einem Kalander oder in einem Extruder vorgenommen werden. Bei dieser zuletzt genannten Neutralisation ist es besonders vorteilhaft, wenn sie im Austragsextruder der Herstellungsanlage für die ionomermodifizierten Copolymerisate für die erfindungsgemäßen Folien vorgenommen wird. Die erfindungsgemäß sehr niedrige Konzentration an Ionomergruppen und die damit ebenfalls nur sehr geringe Menge an zur Neutralisation benötigter Metallverbindung macht sodann eine gesonderte Abtrennoperation der bei der Neutralisation freiwerdenden Abspaltprodukte (beispielsweise Wasser) nicht erforderlich.

Im Vergleich zu analogen Ethylenhomopolymerisaten zeigen die ionomermodifizierten Ethylencopolymerisate einige bemerkenswerte Eigenschaftesverbesserungen bei den optischen Eigenschaften (Glanz, Transparenz), der Festigkeit (z.B. Dart drop) und der Ausziehfähigkeit. Diese speziellen Eigenschaften leiten sich vor allem aus der Anwesenheit ionischer Bindungen und Ordnungszustände ab. Hierzu ist vor allem das Phänomen zu rechnen, daß diese Ionomeren im festen Zustand Festigkeitswerte aufweisen, die diejenigen eines unter vergleichbaren Bedingungen hergestellten LDPE deutlich übertreffen. In der Schmelze verhalten sie sich dagegen wie ein LDPE gleichen Aufbaus ohne Ionomergruppen. Diese Erscheinung deutet darauf hin, daß die ionomeren Gruppen eine thermisch reversible Funktion ausüben, die sich im festen Zustand wie eine Molekülvergrößerung bzw. Molekülverfestigung auswirkt.

Das Eigenschaftbild eines ionomermodifizierten LDPE hängt wesentlich von der Konzentration seiner Ionomergruppen ab; ein ausgeprägtes Eigenschaftsbild ist normalerweise ab Ionomergruppenkonzentrationen, also neutralisierten Carboxylgruppen, von wenigstens 2 Mol-%, deutlicher ab etwa 5 Mol-% erkennbar.

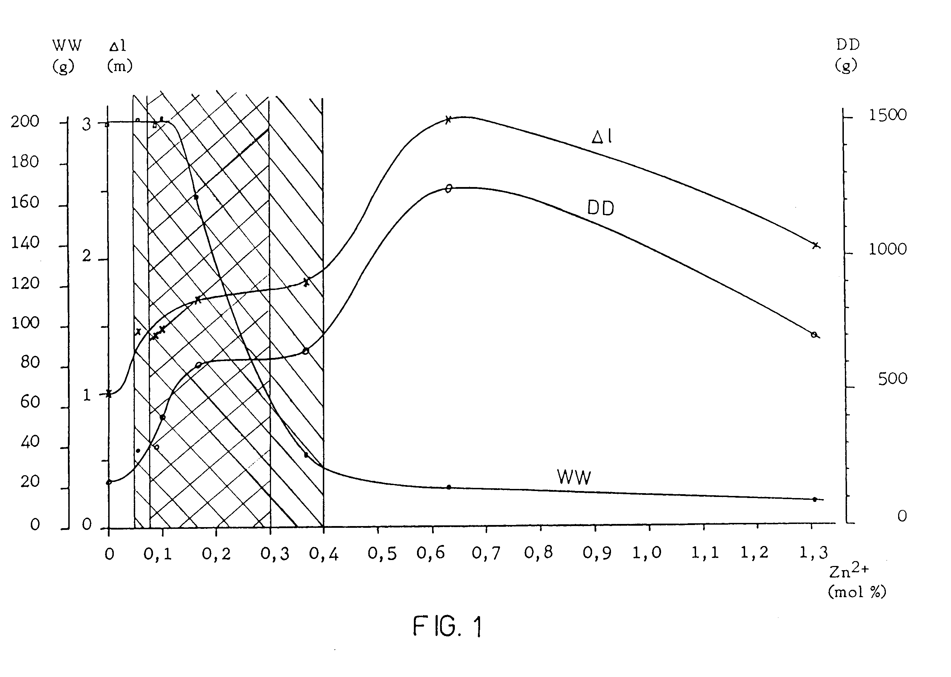

Die weiter oben genannten ionomerbedingten Eigenschaften verstärken sich normalerweise mit der Ionomergruppenkonzentration im positiven Sinne, wohingegen die Weiterreißfestigkeit stark abnimmt (s. Fig. 1), was beispielsweise bei daraus hergestellten Folien die Gebraucheigenschaften sehr nachteilig beeinflußt. Ionomere Copolymere des Ethylens werden deshalb bevorzugt zur Herstellung technischer Formkörper eingesetzt, wo es auf hohe Festigkeit und Zähigkeit und eine gute Verarbeitbarkeit aus der Schmelze ankommt.

Der Einbau ionomerer Gruppen erhöht das Wasseraufnahmevermögen dieser Copolymerisate; das gilt sowohl für das Umgebungswasser als auch für das bei der oben geschilderten Neutralisation entstehende Reaktionswasser. Dieses im Copolymerisat mit 2-5 oder mehr Mol-% Ionomergruppenkonzentration befindliche Wasser führt bei der Verarbeitung dieser Stoffe aus der Schmelze zu Störungen, beispielsweise zur Bläschenbildung in Formkörpern. Um diese Störungen zu vermeiden, muß das Material getrocknet und trocken gelagert werden, was mit erheblichen Aufwand verbunden ist.

Aus den obigen Ausführungen geht hervor, daß einerseits ein ausgeprägter Ionomercharakter erst ab einer Ionomergruppenkonzentration von 2 Mol-% zu erwarten ist und daß andererseits eine drastische Verschlechterung der Weiterreißfestigkeit sowie eine die Verarbeitung störende erhöhte Wasseraufnahmefähigkeit einer Verwendung des ionomermodifizierten LDPE für Folien im Wege steht.

Überraschenderweise gibt es dennoch im Bereich sehr geringer Ionomergruppenkonzentrationen und innerhalb bestimmter Neutralisationsbereiche, wie beim erfindungsgemäßen ionomermodifizierten Polyethylen, hervorragend geeignete Copolymerisate für Folien aus ionomermodifiziertem LDPE, bei denen unerwartet hohe Festigkeitswerte und Ausziehfähigkeiten bei praktisch gleichbleibend guter Weiterreißfestigkeit erreicht werden, wie Fig. 1 und die zugehörigen Beispiele zeigen.

Aus dem großen Bereich der in bekannter Weise durch die Polymerisationslenkung einstellbaren Schmelzindices seien auf dem Foliensektor für die erfindungsgemäßen Folien solche im Bereich von 0,1-20 g/10 min genannt. Diese Schmelzindices werden in üblicher Weise bei 190°C und einer Belastung von 2,16 kp gemessen. In besonders bevorzugter Weise werden Schmelzindices im Bereich von 0,3 - 5 g/10 min/190°C; 2,16 kp eingestellt.

Die erfindungsgemäßen Folien zeichnen sich - wie teilweise schon erwähnt - im Vergleich zu solchen aus nicht ionomermodifizierten LDPE durch eine Reihe unerwarteter und bemerkenswerter Verbesserungen aus:

- Sehr hohe Folienausziehfähigkeit
- Sehr hohe mechanische Festigkeitswerte (z.B. Dart drop)
- Sehr gute Maschinengängigkeit (erhöhter Ausstoß, ausgezeichnete Blasenstabilität)
- Hohe Transparenz

Von den aufgezählten, unerwartet verbesserten Eigenschaften sind insbesondere die hohe Ausziehfähigkeit und die Festigkeit der erfindungsgemäßen Folien überraschend. Die Erfahrung bei den nicht ionomermodifizierten Copolymeren des Ethylens zeigt nämlich, daß Maßnahmen, die zur Verbesserung der Ausziehfähigkeit und der optischen Qualitäten (Transparenz, Glanz) führen, normalerweise einen Verschlechterung der Festigkeitseigenschaften mit sich bringen, was auch umgekehrt der Fall ist.

Im Hinblick auf seine Ausziehfähigkeit gleichen oder übertreffen die erfindungsgemäßen Folien solche aus vergleichbaren linearen Polyethylenen niedriger Dichte (LLDPE). Im Gegensatz zu diesen können

4

jedoch die erfindungsgemäßen Folien auf konventionellen Folienextrudern wie LDPE verarbeitet werden, was dem Folienhersteller einen aufwendigen Umbau oder gar Neukauf eines Folienextruders erspart.

Die für ionomermodifizierte Polyethylene charakteristischen Nachteile - erhöhtes Wasseraufnahmevermögen und damit verbundene Verarbeitungsprobleme, schlechte Weiterreißfestigkeit - treten bei den erfindungsgemäßen Folien überraschenderweise nicht in Erscheinung. Selbst die bei einer nachträglichen Neutralisation frei werdende Wassermenge kann schadlos im Produkt verbleiben; auch ist eine Lagerung unter Ausschluß von Luftfeuchtigkeit nicht erforderlich.

Schließlich ist der überraschend niedrige Ionomergruppengehalt der erfindungsgemäßen Folien auch ein wirtschaftlich wichtiger Faktor, da die Materialmehrkosten sehr niedrig sind und durch den Gewinn an Eigenschaftverbeserungen und/oder an Umsatzerhöhung mehr als kompensiert werden.

Beispiele 1-13

In 2 in Serie kontinuierlich durchströmten stopfbuchslosen 700 ml-Hochdruckrührautoklaven mit idealer Rückvermischung wurden die in der Tabelle aufgeführten Monomerströme durch jeweilige Zugabe von PN (tert.-Butylperisononanoat) bzw. PO (tert.-Butylperisooctanoat) in die beiden Reaktoren bei einem Reaktionsdruck bis zu 1.850 bar copolymerisiert. In einem nachgeschalteten Entspannungsabscheider wurde das Copolymerisat von unumgesetztem Ethylen und dem als Lösungsmittel eingesetzten Methanol befreit.

Zur Molekulargewichtseinstellung wurdem dem Eingangsstrom Propionaldehyd (PRAL) bzw. Propen (PEN) hinzugegeben. Die Reaktionstemperatur wurde mit Hilfe der Initiatormenge kontrolliert.

Die Versuchsparameter und Produkteigenschaften sind in den Tabellen dargestellt.

Figur 1 veranschaulicht die Folieneigenschaften (Beispiele 6-13)
- o  Weiterreißwiderstand WW(g)
- o  relative Strangausziehfähigkeit $\Delta 1(m)$ und
- o  Dart drop-Festigkeit DD(g)

in Abhängigkeit der Zinkionenkonzentration $Zn^{2+}$ (mol%), bezogen auf die Gesamtmolzahl von Ethylen und Methacrylsäure. Um die Vergleichbarkeit zu gewährleisten, wurden Produkte mit gleichem Endschmelzindex angestrebt.

Der relevante Bereich ist einfach schraffiert, der bevorzugte Bereich kreuzweise schraffiert.

Tabelle 1: Beispiele 1-5: Einstufige Ionomersynthese durch Salzpolymerisation

| Bsp. Nr. | Ethylen Einsatz (kg/g) | Comonomergemisch****) Art 1 | Menge (g/h) | Art 2 | Menge (g/h) | Regler PRAL Menge (g/h) | Initiator PN Reaktor 1 Menge (g/h) | Reaktor 2 Menge (g/h) | Metall-methacry-lat, bez. auf Copoly-mer-Ausbeu-te (Mol-%) |
|---|---|---|---|---|---|---|---|---|---|
| 1 | 30 | NaMA | 55 | MAS | – | 63 | 0,6 | 0,05 | 0,306 |
| 2 | 40 | NaMA | 55 | MAS | 15 | 75 | 2,1 | 0,04 | 0,221 |
| 3 | 30 | Zn(MA)$_2$ | 60 | MAS | – | 113 | 0,9 | 0,06 | 0,147 |
| 4 | 40 | Zn(MA)$_2$ | 60 | MAS | 15 | 81 | 0,8 | 0,07 | 0,117 |
| 5 | 40 | Mg(MA)$_2$ | 51 | MAS | 15 | 85 | 0,9 | 0,05 | 0,119 |

*)  Melt Index bei 190° C/2,16 kp
**)  See Through Clarity
***)  elektronische Durchstoßfestigkeit
****)  MAS:  Methacrylsäure
NaMA:  Natriummethacrylat
Zn(MA)$_2$:  Zinkdimethacrylat
Mg(MA)$_2$:  Magnesiumdimethacrylat

6

Tabelle 1: (Fortsetzung)

| Bsp. Nr. | Temperatur $T_{R1}$ ($^{\circ}$C) | Temperatur $T_{R2}$ ($^{\circ}$C) | Ausbeute Copolymer (kg/h) | MI[*] bei Prod. (g/10') | nach 200 h (g/10') | MI (g/10') | Schockfestig-keit[***] (J) | Transparenz[**] (%) |
|---|---|---|---|---|---|---|---|---|
| 1 | 240 | 260 | 4,7 | 1,3 | 2,2 | 0,9 | 0,16 | 75 |
| 2 | 240 | 260 | 6,5 | 1,9 | 2,0 | 0,1 | 0,20 | 87 |
| 3 | 240 | 260 | 4,9 | 1,8 | 6,0 | 4,2 | 0,13 | 76 |
| 4 | 240 | 260 | 6,1 | 1,2 | 1,2 | 0 | 0,68 | 89 |
| 5 | 240 | 260 | 6,2 | 1,6 | 1,6 | 0 | 0,35 | 86 |

[*]      Melt Index bei 190$^{\circ}$C/2,16 kp (bei der Produktion bzw. nach 200 h)
[**]     See Through Clarity
[***]    elektronische Durchstoßfestigkeit
[****]   MAS:            Methacrylsäure
         NaMA:           Natriummethacrylat
         $Zn(MA)_2$:     Zinkdimethacrylat
         $Mg(MA)_2$:     Magnesiumdimethacrylat

EP 0 223 182 B1

Tabelle 2: Beispiele 6-13: 2-stufige Ionomersynthese durch Neutralisation des Säurecopolymeren im Extruder ZSK 32 über ZnO-Materbatch. Das zur Neutralisation
eingesetzte Masterbatch besteht im wesentlichen aus 22,5 Gew.-% ZnO und einem
Hochdruckpolyethylen (LDPE) mit MI = 7g/10 Min. und D = 0,9185 g/cm$^3$. Die
Einsatzdosierung des Monomerengemisches wurde im Verhältnis von 5:1 auf die
Reaktoren 1 und 2 gesplittet.

| Bsp. Nr. | Ethylen Einsatz (kg/h) | Methacrylsäure Einsatz (g/h) | Regler Menge/Art (g/h) | Initiator | | Temperatur | |
|---|---|---|---|---|---|---|---|
| | | | | Reaktor 1:PO Menge (g/h) | Reaktor 2: PN Menge (g/h) | $T_{R1}$ (°C) | $T_{R2}$ (°C) |
| 6 | 40 | 67 | 1267/PEN | 3,62 | 0,38 | 212 | 250 |
| 7 | 40 | 32 | 1352/PEN | 3,31 | 0,31 | 212 | 250 |
| 8 | 40 | 42 | 1408/PEN | 3,52 | 0,24 | 212 | 250 |
| 9 | 40 | 53 | 1438/PEN | 3,62 | 0,28 | 212 | 250 |
| 10 | 40 | 82 | 1474/PEN | 3,6 | 0,35 | 212 | 250 |
| 11 z.Vgl. | 40 | 177 | 152/PRAL | 1,97 | 0,12 | 212 | 250 |
| 12 z.Vgl. | 27 | 212 | 100/PRAL | 0,93 | 0,06 | 212 | 250 |
| 13 z.Vgl. | 27 | 447 | 104/PRAL | 1,86 | 0,19 | 212 | 250 |
| 4 vgl.oben | 40 | Zn(MA)$_2$ 60 MAS 15 | 81/PRAL | 0,8 | 0,07 | 240 | 260 |

EP 0 223 182 B1

Tabelle 2: (Fortsetzung)

| Bsp. Nr. | Ausbeute Copolymer (kg/h) | MAS-Gehalt (Gew.-%/ Mol-%) | MI (g/10') | MI nach Neutralisation) (g/10') | Zn (Mol-%) | rel. Strang-ausziehfähig-keit l (m) | Weiter-reißwider-stand (g) | Dart drop (g) |
|---|---|---|---|---|---|---|---|---|
| 6 | 6,1 | 1,1 / 0,36 | 1,4 | 1,4 | - | 1,0 | 200 | 168 |
| 7 | 6,1 | 0,52/ 0,17 | 2,05 | 1,78 | 0,059 | 1,48 | 202 | 282 |
| 8 | 6,1 | 0,67/ 0,22 | 2,58 | 1,72 | 0,088 | 1,44 | 196 | 300 |
| 9 | 6,1 | 0,86/ 0,28 | 2,25 | 1,56 | 0,1 | 1,49 | 218 | 410 |
| 10 | 6,1 | 1,34/ 0,44 | 4,0 | 2,15 | 0,165 | 1,7 | 164 | 610 |
| 11 z.Vgl. | 5,9 | 3,0 / 1,00 | 12,8 | 1,8 | 0,37 | 1,82 | 35 | 650 |
| 12 z.Vgl. | 3,9 | 5,4 / 1,82 | 28,7 | 2,24 | 0,63 | 3,0 | 19 | 1250 |
| 13 z.Vgl. | 4,2 | 10,6 / 3,72 | 72,0 | 1,6 | 1,31 | 2,06 | 12 | 700 |
| 4 vgl. oben | 6,1 | (0,96/0,31) | 1,2 | 1,2 | 0,117 | 1,4 | 85 | 338 |

## Patentansprüche

1. Folien aus ionomermodifiziertem niederdichten Polyethylen (LDPE), das durch Copolymerisation von Ethylen und gegebenenfalls weiteren Comonomeren mit mindestens einer ungesättigten Carbonsäure und gegebenenfalls mindestens einem Metallsalz dieser Säure in Gegenwart von radikalischen Polymerisationsinitiatoren unter den Bedingungen der Ethylen-Hochdruckpolymerisation und gegebenenfalls nachträglicher Teilneutralisation hergestellt werden kann, wobei die Folien einen Weiterreißwiderstand von 30-200 g, eine relative Strangausziehfähigkeit von 1,3-1,9 m und eine Dart-Drop-Festigkeit von 220-720 g aufweisen, dadurch gekennzeichnet, daß die im Copolymeren vorhandenen Carboxylgruppen zu 30-95 % mit Metallkationen neutralisiert sind und daß die neutralisierten Carboxylgruppen 0,1-0,8 Mol-% der Gesamtmolzahl aller Monomeren darstellen und daß das Copolymer einen Schmelzindex im Bereich von 0,1-20 g/10 min (190°C; 2,16 kp) besitzt.

2. Folien nach Anspruch 1, dadurch gekennzeichnet, daß die Carboxylgruppen zu 50-90 % neutralisiert sind.

3. Folien nach Anspruch 1, dadurch gekennzeichnet, daß die neutralisierten Carboxylgruppen 0,15-0,6 Mol-% der Gesamtzahl aller Monomeren darstellen.

4. Folien nach Anspruch 1, dadurch gekennzeichnet, daß als ungesättigte Carbonsäuren Acrylsäure oder Methacrylsäure vorhanden sind.

5. Folien nach Ansprüchen 1 und 4, dadurch gekennzeichnet, daß Kationen der Metalle Natrium, Zink oder Magnesium vorhanden sind.

6. Folien nach Ansprüchen 1 bis 5, dadurch gekennzeichnet, daß das Copolymer einen Schmelzindex im Bereich von 0,3 - 5 g/10 min (190°C; 2,16 kp) besitzt.

7. Folien nach Ansprüchen 1 bis 6 aus Copolymeren, die erhalten werden durch teilweise Neutralisation des Ethylen-Carbonsäure-Copolymers mit Metallkationen im Austragsextruder der Hochdruckpolyethylen-Herstellungsanlage.

8. Verfahren zur Herstellung von Folien aus ionomermodifiziertem niederdichten Polyethylen (LDPE), das durch Zusatz weiterer Comonomerer modifiziert sein kann, dadurch gekennzeichnet, daß Ethylen und gegebenenfalls die weiteren Comonomeren unter den Bedingungen der Ethylen-Hochdruckpolymerisation mit mindestens einer ungesättigten Carbonsäure und mindestens einem Metallsalz dieser Säure oder einem Salz/Säure-Gemisch in Gegenwart von radikalischen Polymerisationsinitiatoren umgesetzt werden und dabei die Konzentration der einpolymerisierten neutralisierten ungesättigten Carbonsäuren bei 0,1-0,8 Mol-%, bezogen auf umgesetztes Ethylen und die gegebenenfalls weiteren Comonomeren, und der Neutralisationsgrad der Carboxylgruppen bei 30-95°C gehalten werden, wobei die Copolymeren ferner Schmelzindices von 0,1-20 g/10 min (190°C; 2,16 kp) besitzen, und übliche Weiterverarbeitung zu Folien.

**Claims**

1. Films of ionomer-modified low-density polyethylene (LDPE) which can be prepared by copolymerisation of ethylene and if appropriate other comonomers with at least one unsaturated carboxylic acid and if appropriate at least one metal salt of this acid in the presence of free radical polymerisation initiators under the conditions of ethylene high pressure polymerisation and if appropriate subsequent partial neutralisation, the films having a tear propagation resistance of 30-200 g, a relative stretchability of 1.3-1.9 m and a dart drop strength of 220-720 g, characterised in that the carboxyl groups present in the copolymer are neutralised to the extent of 30-95% with metal cations, and in that the neutralised carboxyl groups represent 0.1-0.8 mol% of the total number of moles of all the monomers, and in that the copolymer has a melt flow index in the range from 0.1-20 g/10 minutes (190°C; 2.16 kp).

2. Films according to Claim 1, characterised in that the carboxyl groups are neutralised to the extent of 50-90%.

3. Films according to Claim 1, characterised in that the neutralised carboxyl groups represent 0.15-0.6 mol% of the total number of all the monomers.

4.  Films according to Claim 1, characterised in that acrylic acid or methacrylic acid are present as unsaturated carboxylic acids.

5.  Films according to Claims 1 and 4, characterised in that cations of the metals sodium, zinc or magnesium are present.

6.  Films according to Claims 1 to 5, characterised in that the copolymer has a melt flow index in the range from 0.3-5 g/10 minutes (190°C; 2.16 kp).

7.  Films according to Claims 1 to 6 of copolymers which are obtained by partial neutralisation of the ethylene/carboxylic acid copolymer with metal cations in the discharge extruder of the high pressure polyethylene production line.

8.  Process for the preparation of films of ionomer-modified low-density polyethylene (LDPE) which can be modified by addition of further comonomers, characterised in that ethylene and if appropriate the further comonomers are reacted under the conditions of ethylene high pressure polymerisation with at least one unsaturated carboxylic acid and at least one metal salt of this acid or a salt/acid mixture in the presence of free radical polymerisation initiators, the concentration of the copolymerised neutralized unsaturated carboxylic acids being kept at 0.1-0.8 mol%, based on the ethylene reacted and, where appropriate, the further comonomers, and the degree of neutralization of the carboxyl groups being kept at 30-95%, and the copolymers furthermore having melt flow indices of 0.1-20 g/10 minutes (190°C; 2.16 kp), and customary further processing to films is carried out.

**Revendications**

1.  Feuilles de polyéthylène basse densité (PEBD) modifié par un ionomère, qui peuvent être produites par copolymérisation d'éthylène et, le cas échéant, d'autres comonomères avec au moins un acide carboxylique non saturé et, le cas échéant, au moins un sel métallique de cet acide en présence d'initiateurs de polymérisation radicalaire dans les conditions de polymérisation d'éthylène sous haute pression, suivie, le cas échéant, d'une neutralisation partielle, les feuilles présentant une résistance à la déchirure amorcée de 30 à 200 g, une étirabilité relative de 1,3-1,9 mètre et une résistance à la masse tombante (Dart-Drop) de 220 à 720 g, caractérisées en ce que les groupes carboxyle présents dans le copolymère sont neutralisés à 30-95 % avec des cations métalliques et en ce que les groupes carboxyle neutralisés représentent 0,1 à 0,8 mole % du nombre total de moles de tous les monomères, et en ce que le copolymère a un indice de fluidité dans la plage de 0,1 à 20 g/10 min (190°C ; 2,16 kp).

2.  Feuilles suivant la revendication 1, caractérisées en ce que les groupes carboxyle sont neutralisés à 50-90 %.

3.  Feuilles suivant la revendication 1, caractérisées en ce que les groupes carboxyle neutralisés représentent 0,15 à 0,6 mole % du nombre total de tous les monomères.

4.  Feuilles suivant la revendication 1, caractérisées en ce que de l'acide acrylique ou de l'acide méthacrylique est présent comme acides carboxyliques non saturés.

5.  Feuilles suivant les revendications 1 et 4, caractérisées en ce que des cations des métaux sodium, zinc ou magnésium sont présents.

6.  Feuilles suivant les revendications 1 à 5, caractérisées en ce que le copolymère possède un indice de fluidité dans la plage de 0,3 à 5 g/10 min (190°C ; 2,16 kp).

7.  Feuilles suivant les revendications 1 à 6 en copolymères qui sont obtenus par neutralisation partielle du copolymère éthylène-acide carboxylique avec des cations métalliques dans l'extrudeuse de décharge de l'installation de production de polyéthylène haute pression.

8.  Procédé de production de feuilles en polyéthylène basse densité (PEBD) modifié par un ionomère, qui peut être modifié par addition d'autres comonomères, caractérisé en ce qu'on fait réagir de l'éthylène et, le cas échéant, les autres comonomères dans les conditions de la polymérisation d'éthylène sous haute pression avec au moins un acide carboxylique non saturé et au moins un sel métallique de cet acide ou un mélange sel/acide en présence d'initiateurs de polymérisation radicalaire et on maintient la concentration des acides carboxyliques non saturés neutralisés incorporés par polymérisation à 0,1-0,8 mole %, par rapport à l'éthylène ayant réagi et aux autres comonomères éventuellement présents et le degré de neutralisation des groupes carboxyle à 30-95°C, les copolymères possédant en outre des indices de fluidité de 0,1-20 g/10 min (190°C ; 2,16 kp), avec transformation ultérieure classique en feuilles.

FIG. 1

EP 0 223 182 B1